# EUROPÄISCHE PATENTSCHRIFT

(11) **EP 0 376 275 B1**
(45) Veröffentlichungstag und Bekanntmachung des Hinweises auf die Patenterteilung: **02.11.1994**
(21) Anmeldenummer: 89123991.5
(22) Anmeldetag: 27.12.1989
(51) Int. Cl.: A47J 39/00, H05B 6/80

(54) **Wärmevorrichtung für Lebensmittel**
Food heating device
Dispositif de chauffage pour aliments

(30) Priorität: 28.12.1988 DE 3844144
(43) Veröffentlichungstag der Anmeldung: 04.07.1990
(73) Patentinhaber: Kirchhoff, Ernst, D-31515 Wunstorf (DE)
(72) Erfinder: Kirchhoff, Ernst, D-31515 Wunstorf (DE)
(74) Vertreter: Liska, Horst, Dr.-Ing.

(56) Entgegenhaltungen:
- EP-A- 0 190 954
- DE-A- 2 221 765
- DE-A- 3 627 332
- GB-A- 2 026 297

## Beschreibung

Die Erfindung betrifft eine Wärmvorrichtung für Lebensmittel, mit einer elektrischen Heizeinrichtung zur Erwärmung eines die Lebensmittel aufnehmenden Backraums und mit einem Wasser in einem Durchlauferhitzer erhitzenden und in Form von Backschwaden in den Backraum einführenden Wasserdampferzeuger.

Tiefgefrorene Nahrungsmittel trocknen beim Auftauen vergleichsweise stark aus, insbesondere wenn sie zur Beschleunigung des Auftauens in einer Wärmvorrichtung aufgebacken werden. Um der Austrocknung entgegenzuwirken, ist es aus der DE-OS 36 27 332 bekannt, den Nahrungsmitteln während des Wiedererwärmens Wasserdampf in Form von Backschwaden, d.h. in Form eines Wasserdampf-Luft-Gemisches zu injizieren. Hierdurch wird nicht nur die Auftauzeit bzw. die Fertigbackzeit verkürzt, sondern auch der Feuchtigkeitsverlust ausgeglichen.

Bei der bekannten Wärmvorrichtung wird der Backraum herkömmlich durch ein Heißluftgebläse, durch ein Mikrowellengerät oder eine Infrarot-Heizeinrichtung erwärmt. Der die Backschwaden erzeugende Wasserdampferzeuger umfaßt einen gesondert elektrisch beheizten Durchlauferhitzer für das zu verdampfende Wasser. Eine Wärmvorrichtung dieser Art hat eine vergleichsweise lange Vorheizzeit, in der ihre Komponenten auf Betriebstemperatur gebracht werden, was insbesondere bei kleineren, nicht für den Dauereinsatz gedachten Haushaltsgeräten unerwünscht ist. Da mehrere voneinander unabhängige Heizeinrichtungen vorgesehen werden müssen, ergibt sich ein vergleichsweise hoher Energieverbrauch.

Aus den US-Patenten 4 173 215 und 4 700 685 sind ferner Dampfkochgeräte bekannt, deren elektrische Heizeinrichtungen außerhalb des Backraums angeordnet und zur Erzeugung von Wasserdampf ausgenutzt werden, der dann von einem Gebläse im Backraum umgewälzt wird. Bei den bekannten Dampfkochgeräten werden die zu erwärmenden Nahrungsmittel über dem Dampf indirekt geheizt. Die Geräte eignen sich deshalb nur für spezielle Arten von Lebensmitteln und nur begrenzt zum Auftauen tiefgefrorener Nahrungsmittel. Auch bei diesen bekannten Geräten ist die Vorwärmzeit bis zur Betriebsbereitschaft vergleichsweise groß.

Eine weitere Wärmvorrichtung mit einer Infrarotstrahlungseinrichtung und einem Wasserdampferzeuger ist in GB-A-2026297 beschrieben.

Es ist Aufgabe der Erfindung, eine konstruktiv einfache Wärmvorrichtung für Nahrungsmittel anzugeben, die rasch auf Betriebstemperatur aufgeheizt werden kann und im Betrieb das Austrocknen der Lebensmittel beim Erwärmen verhütet.

Ausgehend von der eingangs erläuterten Wärmvorrichtung für Nahrungsmittel wird diese Aufgabe erfindungsgemäß dadurch gelöst, daß die den Backraum erwärmende Heizeinrichtung als Infrarot-Strahlungsheizeinrichtung ausgebildet ist, die zugleich den benachbart angeordneten Durchlauferhitzer beheizt.

Die vorzugsweise aus wenigstens einem Infrarot-Strahlerelement bestehende Infrarot-Strahlungsheizeinrichtung beheizt sowohl den Backraum als auch den Durchlauferhitzer durch Strahlungswärme, was zu einer besonders kurzen Aufheizzeit nicht nur des Backraums, sondern auch des Durchlauferhitzers führt. Insbesondere bei nur gelegentlich benutzten Wärmvorrichtungen ergibt sich damit eine beträchtliche Verringerung der Auftauzeit von tiefgefrorenen Lebensmitteln.

Der Durchlauferhitzer ist zweckmäßigerweise auf der dem Backraum abgewandten Seite des Infrarot-Strahlerelements angeordnet, insbesondere so, daß er zugleich eine Reflektoreinheit bildet, die vom Backraum weg abgestrahlte Wärmeenergie zum Backraum hin reflektiert. Diese Maßnahme erhöht den Wirkungsgrad der Wärmvorrichtung.

Der Durchlauferhitzer wirkt als Wärmetauscher und kann beispielsweise die Form einer meanderförmigen Kupferrohrschange haben, die der Wärmestrahlung des Infrarot-Strahlerelements ausgesetzt ist. Eine solche Gestaltung hat zwar eine sehr kurze Vorheizzeit, was jedoch aufgrund der geringen Wärmekapazität der Rohrschlange zu Schwankungen in der Dampferzeugung führen kann. Dies wird vermieden, wenn der insbesondere als Reflektoreinheit ausgebildete Durchlauferhitzer die Form eines Wärmespeicherblocks hat, durch den Wärmetauschkanäle des Durchlauferhitzers geführt sind. Die in dem Wärmespeicherblock gespeicherte Wärme gleicht Wärmebedarfsschwankungen aufgrund von Speisewasserschwankungen aus und sorgt für eine gleichmäßigere Dampferzeugung.

Um den Wärmeübergang vom Infrarot-Strahlerelement auf den Wärmespeicherblock zu verbessern, greift das Infrarot-Strahlerelement zumindest teilweise in Aussparungen des Wärmespeicherblocks ein, die der Längskontur des Strahlerelements folgen und das Strahlerelement zur Erhöhung der Wärmeaufnahmefläche des Wärmespeicherblocks teilweise umfassen. Das Strahlerelement hat zweckmäßigerweise eine gerade Form, kann aber auch gebogen, insbesondere kreisförmig oder halbkreisförmig gekrümmt sein.

Beiderseits des Infrarot-Strahlerelements oder gegebenenfalls beiderseits von Gruppen nebeneinander angeordneter Strahlerelemente können an der Reflektoreinheit Blenden vorgesehen sein, die zum Backraum hin über das Strahlerelement bzw. die Gruppe von Strahlerelementen vorstehen. Die Blenden verhindern unerwünschte seitliche Abstrahlung der Wärme, was den Wirkungsgrad der Wärmvorrichtung verbessert.

Um eine Verschmutzung des Infrarot-Strahlerelements zu verhindern und gegebenenfalls eine flächige Strahlungserwärmung des Backraums zu erreichen, kann das Infrarot-Strahlerelement zum Backraum hin mit einer die Wärmeverteilung egalisierenden Platte, beispielsweise aus einem Keramikmaterial oder dergleichen abgedeckt sein. In diesem Zusammenhang können die Blenden zusammen mit der Platte eine Wärmekammer begrenzen, durch die die Beheizung des Durchlauferhitzers begünstigt wird. Falls erforderlich kann die Reflektoreinheit jedoch auch mit elektrischen Zusatzheizelementen versehen sein.

In einer bevorzugten Ausgestaltung bilden das Infrarot-Strahlerelement und zumindest die den Durchlauferhitzer bildende Reflektoreinheit eine gemeinsame Baueinheit. Auf diese Weise lassen sich auch herkömmliche Wärmvorrichtungen, insbesondere auch Backöfen nachträglich mit Wasserdampferzeugern der beschriebenen Art ausrüsten. In jedem Fall wird jedoch die Endmontage erleichtert.

In einer bevorzugten Ausgestaltung ist der Durchlauferhitzer mehrstufig ausgebildet, wobei in einer ersten Erhitzerstufe zunächst im wesentlichen nur Wasserdampf erzeugt wird und der Luftanteil der Backschwaden erst in der zweiten Erhitzerstufe zugemischt wird. Die Zumischung erfolgt zweckmäßigerweise in einer von dem Dampfstrom der ersten Erhitzerstufe getriebenen, die Luft ansaugenden Dampfstrahl-Saugpumpe. Entsprechend dem bei der Zumischung der Luft sich vergrößernden Strömungsvolumen, ist der Strömungsquerschnitt der zweiten Erhitzerstufe zweckmäßigerweise größer gewählt als der der ersten Erhitzerstufe. Bei geeigneter Anordnung von Rückschlagventilen im Wasserströmungsweg vor und gegebenenfalls nach dem Durchlauferhitzer läßt sich am Eingang des Durchlauferhitzers ein Unterdruck erzeugen, durch den das Speisewasser aus einem Vorratsbehälter angesaugt wird. Auf diese Weise erübrigt sich gegebenenfalls eine Dosierpumpe für das zuzuführende Wasser.

In einer Variante des Wasserdampferzeugers umfaßt dieser eine vom Luftstrom eines Luftgebläses getriebene Ejektorpumpe am Eingang des Durchlauferhitzers, die das Speisewasser aus einem Vorratsbehälter in den Luftstrom saugt und zugleich in dem für die Backschwaden erwünschten Luft-Wasser-Verhältnis mischt.

Die vorstehend erläuterte Wärmvorrichtung läßt sich nicht nur zum Auftauen tiefgefrorener Nahrungsmittel verwenden, sondern bei entsprechender Heizleistung auch zum Fertigbacken und/oder Grillen.

Im folgenden sollen Ausführungsbeispiele der Erfindung anhand einer Zeichnung näher erläutert werden. Hierbei zeigt:
- Fig. 1: eine schematische Darstellung einer erfindungsgemäßen Wärmvorrichtung für Nahrungsmittel;
- Fig. 2: eine schematische Darstellung eines Backschwadenerzeugers der Wärmvorrichtung, dessen Durchlauferhitzer mit einem Infrarot-Strahlerelement zu einer Baueinheit vereinigt ist;
- Fig. 3: eine Schnittansicht durch eine erste Variante des Durchlauferhitzers;
- Fig. 4: eine Schnittansicht durch eine zweite Variante einer Baueinheit aus Infrarot-Strahlerelementen und einem Durchlauferhitzer und
- Fig. 5: eine schematische Darstellung einer Variante eines in der Wärmvorrichtung nach Fig. 1 verwendbaren Backschwadenerzeugers.

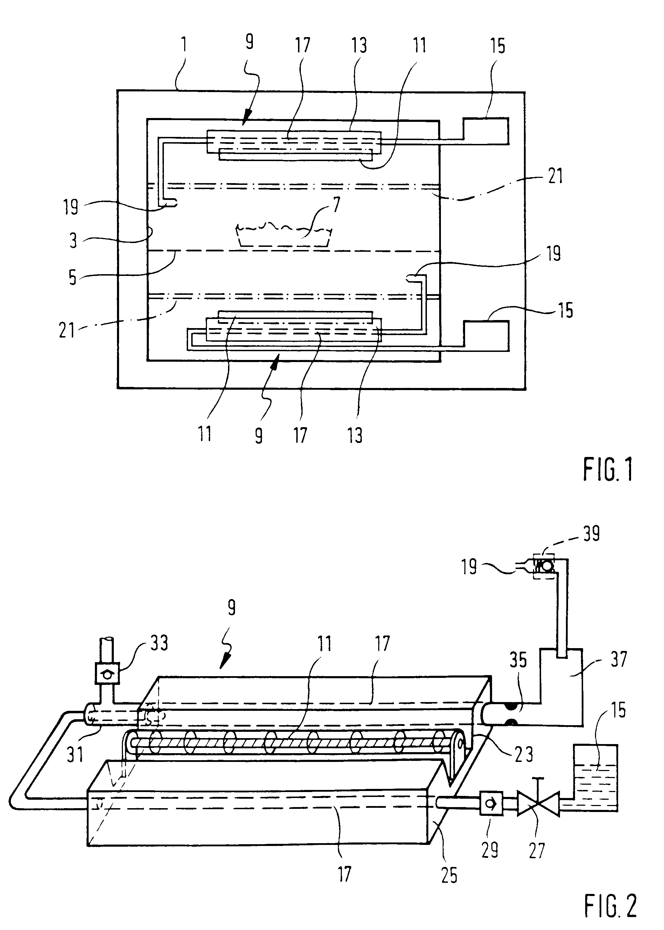

Der in Fig. 1 schematisch dargestellte Wärme- bzw. Backofen 1 hat einen durch eine nicht näher dargestellte Türe verschließbaren Backraum 3, in welchem auf einem Rost 5 das aufzutauende bzw. fertigzubackende Nahrungsmittel 7 aufgestellt wird. Oberhalb und unterhalb des für die Aufnahme des Nahrungsmittels 7 vorgesehenen Raums sind nachfolgend noch näher erläuterte Heizeinheiten 9 angeordnet, von denen jede zumindest ein Infrarot-Strahlerelement 11 für die Strahlungserwärmung des Nahrungsmittels 7 umfaßt. Das Infrarot-Strahlerelement strahlt vorzugsweise im kurzwelligen Bereich des Infrarot-Spektrums und ist zweckmäßigerweise als Infrarot-Hellstrahler ausgebildet. Auf der dem Nahrungsmittel 7 in dem Backraum 3 abgewandten Seite des Infrarot-Strahlerelements 11 hat jede der beiden Heizeinheiten 9 eine Reflektoreinheit 13. Die Reflektoreinheiten 13 bestehen aus wärmeleitendem Material und bilden zugleich Durchlauferhitzer von Backschwadenerzeugern, die in den Backraum 3 Backschwaden, d.h. ein Gemisch aus Wasserdampf und Luft einleiten. Der Durchlauferhitzer erwärmt das aus einem Vorratsbehälter 15 dosiert zufließende Wasser in Wärmetauschkanälen 17. Bei den Wasserkanälen 17 kann es sich um Kupferrohre oder dergleichen handeln, die mit dem Reflektor 13 zu einer Einheit verbunden sind. Der Backschwadenerzeuger führt den Dampf in nachstehend noch näher erläuterter Weise Luft zu, die in dem Durchlauferhitzer ebenfalls erwärmt wird, wobei das Dampf-Luft-Gemischverhältnis entweder durch Einstellen oder Regeln der Dampfmenge oder durch Einstellen bzw. Regeln der Luftmenge vorgegeben wird. Die Backschwaden werden über eine Düse 19 in den Backraum 3 geleitet und verhindern hier das Austrocknen bzw. übermäßigen Feuchtigkeitsverlust des aufzutauenden und/oder fertigzubackenden Nahrungsmittels 7.

Der Wärme- bzw. Backofen 1 hat im dargestellten Ausführungsbeispiel zwei voneinander gesonderte Backschwadenerzeuger mit gesonderten Heizeinheiten. Alternativ kann auch lediglich ein einziger Backschwadenerzeuger vorgesehen sein. Auch kann ein Teil der Reflektoren von Infrarot-Strahlerelementen keine Durchlauferhitzer-Funktion haben. Es versteht sich auch, daß jeder Backschwadenerzeuger mehrere Düsen haben kann und daß mehrere Backschwadenerzeuger auch aus einem gemeinsamen Wasserbehälter gespeist werden können. Um ein Verschmutzen der Infrarot-Strahlerelemente 11 zu verhindern und gegebenenfalls eine in der Fläche gleichmäßigere Wärmeabstrahlung zu erreichen, können die Heizeinheiten 9 von wärmeleitenden Platten, zum Beispiel aus Keramikmaterial zum Backraum 3 hin abgedeckt sein, wie dies bei 21 angedeutet ist.

Fig. 2 zeigt Einzelheiten der Heizeinheit 9 und der Komponenten des zugeordneten Backschwadenerzeugers. Das Infrarot-Strahlerelement 11 ist als langgestreckter, gerader Infrarot-Hellstrahler ausgebildet und sitzt in einer langgestreckten, nutförmigen Aussparung 23 eines aus gut wärmeleitendem Material, beispielsweise Aluminium bestehenden Blocks 25. Die Wände der Aussparung 23 bilden Reflexionsflächen für die kurzwellige Infrarot-Strahlung des an dem Block 25 gehaltenen Infrarot-Strahlerelements 11. Die Wärmetauschkanäle 17 verlaufen beiderseits des Infrarot-Strahlerelements in dem Block 25. Der Block 25 sorgt aufgrund seiner Wärmespeicherkapazität auch bei schwankender Wasserzufuhr für eine gleichmäßige Wasserdampferzeugung.

Das Wasser wird aus dem Vorratsbehälter 15 über ein einstellbares Drosselventil 27 und ein Rückschlagventil 29 einer ersten Stufe des Durchlauferhitzers zugeführt, in der es auf Dampftemperatur erhitzt wird. Das Drosselventil 27 begrenzt die Wasserdampfmenge, die in Form von Backschwaden dem Backraum 3 zugeführt werden soll, während das Rückschlagventil 29 verhindert, daß der Dampfdruck das beispielsweise aufgrund der Schwerkraft aus dem Behälter 15 zufließende Wasser in den Behälter 15 zurücktreibt. Der aus der ersten Stufe des Durchlauferhitzers austretende Wasserdampf treibt eine Dampfstrahlpumpe 31, die über ein Rückschlagventil 33 Umgebungsluft, insbesondere aus dem Backraum 3 ansaugt und dem Wasserdampf zur Bildung der Backschwaden zumischt. Das Wasserdampf-Luftgemisch der Backschwaden wird in einer zweiten Stufe des Durchlauferhitzers weiter erhitzt und strömt über eine den Dampfdruck in dem Durchlauferhitzer erhöhende Drossel 35 in eine zum Ausgleich von Dampfdruckschwankungen vorgesehene Pufferkammer 37. Die Düse 19 wird aus der Pufferkammer 37 gespeist. Gegebenenfalls kann zwischen der Düse 19 und der Pufferkammer 37 ein federbelastetes Rückschlagventil 39 vorgesehen sein, welches den Ausgangsdruck der Backschwaden auf einem vorbestimmten Wert konstant hält. Der Durchmesser des Wärmetauschkanals 17 der zweiten Stufe ist aufgrund des durch den Luftanteil erhöhten Durchsatzes größer als der Durchmesser des Wärmetauschkanals 17 der ersten Stufe.

Die Komponenten 31, 35, 37 und 19 können zusammen mit der Heizeinheit 9 eine gemeinsame Baueinheit bilden. Dies hat den Vorteil, daß auch herkömmliche Wärmvorrichtungen gegebenenfalls nachträglich ohne wesentliche Umbaumaßnahmen mit einem Backschwadenerzeuger der vorstehenden Art ausrüsten lassen. Da das Infrarot-Strahlerelement 11 nicht nur zur Strahlungserwärmung des Nahrungsmittels sondern auch zur Strahlungsheizung des Durchlauferhitzers ausgenutzt wird, ergibt sich eine insgesamt sehr kurze Vorheizzeit bis zur Betriebsbereitschaft. Die Anordnung eignet sich deshalb insbesondere für nicht in Dauerbetrieb zu betreibende Haushaltsgeräte, bei welchen es auf eine möglichst rasche Betriebsbereitschaft ankommt.

Im folgenden werden Varianten der Wärmvorrichtung der Fig. 1 und 2 erläutert. Gleichwirkende Teile sind mit den Bezugszahlen der Fig. 1 und 2 bezeichnet und zur Unterscheidung mit einem Buchstaben versehen. Zur näheren Erläuterung des Aufbaus und der Wirkungsweise wird auf die Beschreibung der Fig. 1 und 2 Bezug genommen.

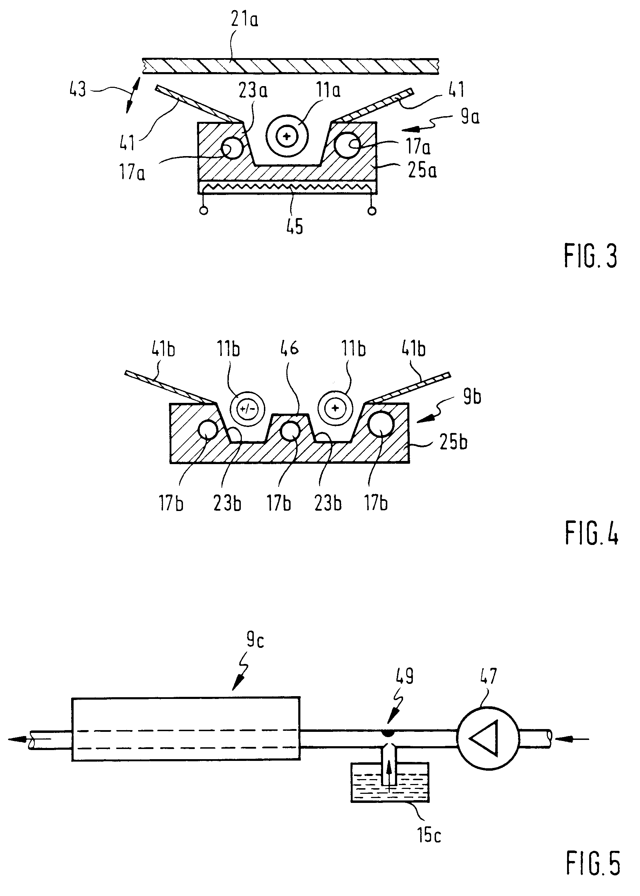

Fig. 3 zeigt eine Heizeinheit 9a, die beiderseits der Aussparung 23a ihres Blocks 25a zum Backraum hin geneigte Blenden 41 trägt. Die Blenden 41 erstrecken sich über die gesamte Länge des Infrarot-Strahlerelements 11a bzw. des Blocks 25a und verringern die Wärmeabstrahlung nach außen. Die Blenden 41 können gegebenenfalls in Richtung eines Pfeils 43 schwenkbar an dem Block 25a angelenkt sein. Insbesondere in Verbindung mit einer die Wärmeverteilung zum Backraum hin egalisierenden Platte 21a können die Blenden 41 von Vorteil sein, da sie zwischen dem Block 25a und der Platte 21a eine Wärmekammer begrenzen. Der Block 25a enthält wiederum Kanäle 17a und bildet einen vom Infrarot-Strahlerelement beheizten Durchlauferhitzer des Backschwadenerzeugers. Sollte die Heizleistung des Infrarot-Strahlerelements 11a für die Dampferzeugung nicht ausreichen, so können insbesondere auf der dem Infrarot-Strahlerelement 11a abgewandten Seite des Blocks 25a elektrische Zusatzheizeinrichtungen 45 vorgesehen werden.

Fig. 4 zeigt eine Variante, mit zwei zueinander parallelen Infrarot-Strahlerelementen 11b, die in ebenfalls zueinander parallelen Aussparungen 23b eines wärmespeichernden Blocks 25b angeordnet sind. Der Block 25b dieser Heizeinheit 9b enthält wiederum Kanäle 17b und bildet nicht nur einen Reflektor für die Infrarot-Strahlerelemente 11b, sondern auch einen Durchlauferhitzer für den Backschwadenerzeuger. Die Aussparungen 23b sind durch eine Rippe 46 voneinander getrennt, die ebenfalls einen Kanal 17b enthält. Die verglichen mit den vorangegangenen Ausführungsbeispielen erhöhte Zahl von Kanälen verlängert die Verweilzeit des zu erhitzenden Wassers im Durchlauferhitzer. Während zwei der Kanäle 17b gleichen Durchmesser haben und gemeinsam die erste Stufe des Durchlauferhitzers bilden, hat der die zweite Stufe bildende dritte Kanal wiederum vergrößerten Durchmesser. In diesem Zusammenhang soll jedoch hervorgehoben werden, daß unterschiedliche Durchmesser der Kanäle nicht zwingend erforderlich sind. Auch die Heizeinheit 9b kann, wie bei 41b dargestellt, mit Blenden versehen sein.

Fig. 5 zeigt eine Variante eines Backschwadenerzeugers, bei welchem ein Gebläse 47 dem mit einer Infrarot-Heizeinheit 9c vereinigten Durchlauferhitzer einen Luftstrom insbesondere aus dem Backraum zuführt. Zwischen dem Gebläse 47 und der Heizeinheit 9c ist eine von dem Luftstrom getriebene Ejektorpumpe 49 angeordnet, die aus einem Wasservorratsbehälter 15c Wasser ansaugt und zugleich zerstäubt. Die Ejektorpumpe 49 ist als solche bekannt und arbeitet nach dem auch in Kraftfahrzeugvergasern angewandten Prinzip. In dem Durchlauferhitzer der Heizeinheit 9c wird damit ein Wassertröpfchen-Luft-Gemisch erhitzt, was die Verdampfung der zerstäubten Wassertröpfchen fördert.

Die vorstehend erläuterten Wärmevorrichtungen haben eine sehr kurze Vorwärmzeit, beispielsweise von 1 bis 3 Minuten bis zum Erreichen einer Temperatur von zum Beispiel 250°C. Gegenüber Wärmvorrichtungen mit gesondert beheiztem Backschwadenerzeuger lassen sich Energieeinsparungen von 30 bis 50 % erzielen.

## Patentansprüche

1. Wärmvorrichtung für Lebensmittel mit einer elektrischen Heizeinrichtung (9) zur Erwärmung eines die Lebensmittel (7) aufnehmenden Backraums (3) und mit einem Wasser in einem Durchlauferhitzer (17, 25) erhitzenden und in Form von Backschwaden in den Backraum (3) einführenden Wasserdampferzeuger (15, 17, 25), **dadurch gekennzeichnet,** daß die den Backraum (3) erwärmende Heizeinrichtung als Infrarot-Strahlungsheizeinrichtung (9) ausgebildet ist, die zugleich den benachbart angeordneten Durchlauferhitzer (17, 25) beheizt.

2. Wärmvorrichtung nach Anspruch 1, dadurch gekennzeichnet, daß die Heizeinrichtung (9) wenigstens ein den Backraum strahlungsbeheizendes Infrarot-Strahlerelement (11) aufweist, auf dessen dem Backraum (3) abgewandter Seite der Durchlauferhitzer (17, 25) angeordnet ist.

3. Wärmvorrichtung nach Anspruch 2, dadurch gekennzeichnet, daß das Infrarot-Strahlerelement (11) eine langgestreckte, insbesondere gerade Form hat und der Durchlauferhitzer (17, 25) dazu Wärmetauschkanäle (17) aufweist, die in einer zum Infrarot-Strahlerelement parallelen Ebene liegen.

4. Wärmvorrichtung nach Anspruch 2 oder 3, dadurch gekennzeichnet, daß der Durchlauferhitzer (17, 25) als dem Infrarot-Strahlerelement (11) zugeordnete Reflektoreinheit (13) ausgebildet ist.

5. Wärmvorrichtung nach Anspruch 4, dadurch gekennzeichnet, daß die Reflektoreinheit (13) einen Wärmespeicherblock (25) aufweist, durch den Wärmetauschkanäle (17) geführt sind.

6. Wärmvorrichtung nach Anspruch 5, dadurch gekennzeichnet, daß das Infrarot-Strahlerelement (11) zumindest teilweise in Aussparungen (23) des Wärmespeicherblocks (25) eingreift, die der Längskontur des Infrarot-Strahlerelements (11) folgen und das Infrarot-Strahlerelement (11) zur Erhöhung der Wärmeaufnahmefläche des Wärmespeicherblocks (25) teilweise umfassen.

7. Wärmvorrichtung nach einem der Ansprüche 4 bis 6, dadurch gekennzeichnet, daß die Reflektoreinheit (13) beiderseits des Infrarot-Strahlerelements (11) oder einer Gruppe nebeneinander angeordneter Infrarot-Strahlerelemente (11b) Blenden (41; 41b) trägt, die zum Backraum (3) hin über das Infrarot-Strahlerelement (11) bzw. die Gruppe von Infrarot-Strahlerelementen (11b) vorstehen.

8. Wärmvorrichtung nach einem der Ansprüche 4 bis 7, dadurch gekennzeichnet, daß das Infrarot-Strahlerelement (11) zum Backraum (3) hin von einer die Wärmeverteilung egalisierenden Platte (21) abgedeckt ist.

9. Wärmvorrichtung nach einem der Ansprüche 4 bis 8, dadurch gekennzeichnet, daß die Reflektoreinheit elektrische Zusatzheizelemente (45) trägt.

10. Wärmvorrichtung nach einem der Ansprüche 1 bis 9, dadurch gekennzeichnet, daß das Infrarot-Strahlerelement (11) und die Reflektoreinheit (13) eine Baueinheit (9) bilden.

11. Wärmvorrichtung nach Anspruch 10, dadurch gekennzeichnet, daß mehrere voneinander gesonderte Baueinheiten (9) zur Backraumerwärmung und Backschwadenerzeugung vorgesehen sind.

12. Wärmvorrichtung nach einem der Ansprüche 1 bis 11, dadurch gekennzeichnet, daß der Durchlauferhitzer (17, 25) mehrstufig ausgebildet ist und zwischen zwei im Wassererhitzungsweg aufeinanderfolgenden Erhitzerstufen eine den Luftanteil der in den Backraum (3) abgegebenen Backschwaden bestimmende Luftzuführeinrichtung aufweist.

13. Wärmvorrichtung nach Anspruch 12, dadurch gekennzeichnet, daß der Strömungsquerschnitt der auf die Luftzuführeinrichtung folgenden Erhitzerstufe größer ist als derjenige der im Erhitzungsweg vorangehenden Erhitzerstufe.

14. Wärmvorrichtung nach Anspruch 12 oder 13, dadurch gekennzeichnet, daß die Luftzuführeinrichtung als vom Dampfstrom der im Erhitzungsweg vorangehenden Erhitzerstufe getriebene Dampfstrahl-Saugpumpe (31) ausgebildet ist.

15. Wärmvorrichtung nach einem der Ansprüche 12 bis 14, dadurch gekennzeichnet, daß am Ausgang des Durchlauferhitzers (17, 25) eine Strömungsdrossel (35) angeschlossen ist.

16. Wärmvorrichtung nach einem der Ansprüche 12 bis 15, dadurch gekennzeichnet, daß zwischen dem Durchlauferhitzer (17, 25) und einer die Backschwaden in den Backraum (3) entlassenden Düse (19) ein Überdruck-Einwegventil (39) angeordnet ist.

17. Wärmvorrichtung nach einem der Ansprüche 1 bis 16, dadurch gekennzeichnet, daß der Wasserdampferzeuger eine vom Luftstrom eines Luftgebläses (47) getriebene, Wasser in den Luftstrom saugende Ejektorpumpe (49) aufweist und daß der Durchlauferhitzer der Ejektorpumpe (49) nachgeschaltet ist.

18. Wärmvorrichtung nach einem der Ansprüche 1 bis 17, dadurch gekennzeichnet, daß das Infrarot-Strahlerelement (11) kurzwellige Infrarot-Strahlung erzeugt und insbesondere als Infrarot-Hellstrahler ausgebildet ist.

## Claims

1. Warming apparatus for foodstuffs with an electrical heating device (9) for heating a baking chamber (3) receiving the foodstuffs (7) and with a water vapour generator (15, 17, 25) heating water in a continuous flow heater (17, 25) and introducing it in the form of baking vapour into the baking chamber (3), characterised in that the heating device heating the baking chamber (3) is constructed as an infra-red radiation heating device (9), which simultaneously heats the continuous flow heater (17, 25) arranged adjacent thereto.

2. Warming apparatus according to Claim 1, characterised in that the heating device (9) comprises at least one infra-red radiation element (11) heating the baking chamber by radiation, on the side of which remote from the baking chamber (3), the continuous flow heater (17, 25) is located.

3. Warming apparatus according to Claim 2, characterised in that the infrared radiation element (11) has an elongated, in particular straight shape and the continuous flow heater (17, 25) comprises heat exchange channels (17), which lie in a plane parallel with respect to the infra-red radiation element.

4. Warming apparatus according to Claim 2 or 3, characterised in that the continuous flow heater (17, 25) is constructed as a reflector unit (13) associated with the infra-red radiation element (11).

5. Warming apparatus according to Claim 4, characterised in that the reflector unit (13) comprises a heat storage block (25), through which heat exchange channels (17) are guided.

6. Warming apparatus according to Claim 5, characterised in that the infra-red radiation element (11) engages at least partly in recesses (23) in the heat storage block (25), which follow the longitudinal contour of the infra-red radiation element (11) and partly surround the infra-red radiation element (11) in order to increase the heat-absorbing surface of the heat storage block (25).

7. Warming apparatus according to one of Claims 4 to 6, characterised in that on both sides of the infra-red radiation element (11) or a group of infra-red radiation elements (11b) arranged one beside the other, the reflector unit (13) supports baffles (41; 41b), which project towards the baking chamber (3) above the infra-red radiation element (11) or the group of infra-red radiation elements (11b).

8. Warming apparatus according to one of Claims 4 to 7, characterised in that towards the baking chamber (3), the infra-red radiation element (11) is covered by a plate (21) equalizing the distribution of heat.

9. Warming apparatus according to one of Claims 4 to 8, characterised in that the reflector unit supports electrical additional heating elements (45).

10. Warming apparatus according to one of Claims 1 to 9, characterised in that the infra-red radiation element (11) and the reflector unit (13) form one structural unit (9).

11. Warming apparatus according to Claim 10, characterised in that a plurality of separate structural units (9) are provided for heating the baking chamber and generating baking vapour.

12. Warming apparatus according to one of Claims 1 to 11, characterised in that the continuous flow heater (17, 25) is constructed with several stages and between two successive heating stages in the water-heating path, comprises an air-supply device determining the proportion of air of the baking vapour delivered to the baking chamber (3).

13. Warming apparatus according to Claim 12, characterised in that the flow cross-section of the heating stage following the air-supply device is greater than that of the preceding heating stage in the heating path.

14. Warming apparatus according to Claim 12 or 13, characterised in that the air-supply device is constructed as a steam jet suction pump (31) driven by the steam current of the preceding heating stage in the heating path.

15. Warming apparatus according to one of Claims 12 to 14, characterised in that a flow restrictor (35) is connected at the outlet of the continuous flow heater (17, 25).

16. Warming apparatus according to one of Claims 12 to 15, characterised in that an excess pressure one-way valve (39) is located between the continuous flow heater (17, 25) and a nozzle (19) discharging the baking vapour into the baking chamber (3).

17. Warming apparatus according to one of Claims 1 to 16, characterised in that the water vapour generator comprises an ejector pump (49) driven by the air stream of an air fan (47) and sucking water into the air stream and that the continuous flow heater is located downstream of the ejector pump (49).

18. Warming apparatus according to one of Claims 1 to 17, characterised in that the infra-red radiation element (11) produces short-wave infra-red radiation and in particular is constructed as an infra-red bright radiator.

## Revendications

1. Dispositif de chauffage pour aliments comportant un organe de chauffage électrique (9) destiné à chauffer un espace de cuisson (3) recevant les aliments (7) et un générateur de vapeur d'eau (15, 17, 25) chauffant de l'eau dans un chauffe-eau instantané (17, 25) et introduisant ladite eau dans l'espace de cuisson (3) sous forme de vapeur de cuisson,
caractérisé en ce que l'organe de chauffage chauffant l'espace de cuisson (3) est conformé comme un dispositif (9) émetteur de rayons infrarouges, qui chauffe également le chauffe-eau instantané adjacent.

2. Dispositif de chauffage selon la revendication 1, caractérisé en ce que l'organe de chauffage (9) comporte au moins un élément émetteur de rayons infrarouges (11) chauffant par rayonnement l'espace de cuisson, le chauffe-eau instantané (17, 25) étant monté sur le côté dudit élément émetteur de rayons infrarouges opposé à l'espace de cuisson (3).

3. Dispositif de chauffage selon la revendication 2, caractérisé en ce que l'élément émetteur de rayons infrarouges (11) a une forme allongée, en particulier rectiligne, et en ce que le chauffe-eau instantané (17, 25) présente en outre des canaux d'échange de chaleur (17), qui se situent dans un plan parallèle à celui de l'élément émetteur de rayons infrarouges.

4. Dispositif de chauffage selon l'une des revendications 2 ou 3, caractérisé en ce que le chauffe-eau instantané (17, 25) est conformé en tant qu'unité formant réflecteur (13), associée à l'élément émetteur de rayons infrarouges (11).

5. Dispositif de chauffage selon la revendication 4, caractérisé en ce que l'unité formant réflecteur (13) présente un bloc accumulateur de chaleur (25), par lequel passent des canaux (17) d'échange de chaleur.

6. Dispositif de chauffage selon la revendication 5, caractérisé en ce que l'élément émetteur de rayons infrarouges (11) vient en prise au moins partiellement dans des évidements (23) du bloc accumulateur de chaleur (25), qui suivent le profil longitudinal de l'élément émetteur de rayons infrarouges (11) et entourent partiellement l'élément émetteur de rayons infrarouges (11) afin d'augmenter la surface d'absorption de chaleur du bloc accumulateur de chaleur (25).

7. Dispositif de chauffage selon l'une des revendications 4 à 6, caractérisé en ce que, des deux côtés de l'élément émetteur de rayons infrarouges (11) ou d'un groupe d'éléments émetteurs de rayons infrarouges (11b) montés les uns à côté des autres, l'unité formant réflecteur (13) porte des écrans (41 ; 41b), qui font saillie en direction de l'espace de cuisson (3) au-dessus de l'élément émetteur de rayons infrarouges (11) ou du groupe d'éléments émetteurs de rayons infrarouges (11b).

8. Dispositif de chauffage selon l'une des revendications 4 à 7, caractérisé en ce que l'élément émetteur de rayons infrarouges (11) est recouvert en direction de l'espace de cuisson (3) par une plaque (21) égalisant la répartition de la chaleur.

9. Dispositif de chauffage selon l'une des revendications 4 à 8, caractérisé en ce que l'unité formant réflecteur porte des éléments de chauffage (45) électriques supplémentaires

10. Dispositif de chauffage selon l'une des revendications 1 à 9, caractérisé en ce que l'élément émetteur de rayons infrarouges (11) et l'unité formant réflecteur (13) constituent une unité (9).

11. Dispositif de chauffage selon la revendication 10, caractérisé en ce que plusieurs unités (9) distinctes les unes des autres sont prévues pour chauffer l'espace de cuisson et pour générer de la vapeur de cuisson.

12. Dispositif de chauffage selon l'une des revendications 1 à 11, caractérisé en ce que le chauffe-eau instantané (17, 25) est conformé avec plusieurs étages, et en ce qu'il présente, entre deux étages de chauffe adjacents sur la trajectoire de chauffage de l'eau, un dispositif d'alimentation d'air déterminant la proportion d'air dans la vapeur de cuisson diffusée dans l'espace de cuisson (3).

13. Dispositif de chauffage selon la revendication 12, caractérisé en ce que la section transversale d'écoulement de l'étage de chauffe situé en aval du dispositif d'alimentation d'air est supérieure à celle de l'étage de chauffe situé en amont du dispositif d'alimentation d'air.

14. Dispositif de chauffage selon l'une des revendications 12 ou 13, caractérisé en ce que le dispositif d'alimentation d'air est conformé comme une pompe aspirante à jet de vapeur (31) entraînée par le flux de vapeur de l'étage situé en amont sur la trajectoire de chauffage.

15. Dispositif de chauffage selon l'une des revendications 12 à 14, caractérisé en ce qu'un élément (35) d'étranglement du flux est raccordé à la sortie du chauffe-eau instantané (17, 25).

16. Dispositif de chauffage selon l'une des revendications 12 à 15, caractérisé en ce qu'une vanne à une voie de surpression (39) est montée entre le chauffe-eau instantané (17, 25) et une buse (19) de diffusion de la vapeur de cuisson dans l'espace de cuisson (3).

17. Dispositif de chauffage selon l'une des revendications 1 à 16, caractérisé en ce que le générateur de vapeur présente un éjecteur (49) entraîné par le flux d'air d'un ventilateur (47) et aspirant l'eau dans le flux d'air et en ce que le chauffe-eau instantané est monté en aval de l'éjecteur (49).

18. Dispositif de chauffage selon l'une des revendications 1 à 17, caractérisé en ce que l'élément émetteur de rayons infrarouges (11) génère des rayons infrarouges de faible longueur d'onde et est conformé en particulier comme un radiateur lumineux à infrarouge.
